# EUROPEAN PATENT SPECIFICATION

(11) **EP 1 135 028 B1**
(45) Date of publication and mention of the grant of the patent: **14.11.2007**
(21) Application number: 98960661.1
(22) Date of filing: 03.12.1998
(51) Int. Cl.: A23C 19/00

(54) **APPARATUS AND METHOD FOR THE MANUFACTURE OF REDUCED AND LOW FAT PASTA FILATA CHEESE**
VORRICHTUNG UND VERFAHREN ZUR HERSTELLUNG VON PASTA-FILATA-KÄSE MIT REDUZIERTEM BZW. NIEDRIGEM FETTGEHALT
DISPOSITIF ET PROCEDE SERVANT A FABRIQUER DES FROMAGES CAILLES ELASTIQUES POSSEDANT UNE FAIBLE TENEUR EN GRAISSES

(43) Date of publication of application: 26.09.2001
(73) Proprietor: Innovative Food Technologies, LLC, Wisconsin 54484 (US)
(72) Inventor: NELLES, Jakob, Maquoketa, IA 52060 (US); HILGEMANN, Anthony, J., Mosinee, WI 54455 (US)
(74) Representative: Calderbank, Thomas Roger
(86) International application number: PCT/US1998/025610
(87) International publication number: WO 2000/032056

(56) References cited:
- EP-A- 0 155 782
- US-A- 4 110 484
- US-A- 4 362 759
- US-A- 4 898 745
- US-A- 5 405 625

## Description

### BACKGROUND OF THE INVENTION

The invention relates generally to a method for the production of reduced and low-fat pasta filata cheeses such as mozzarella cheese, and in particular, to a process for incorporating a rice-based, reduced and low-fat cheese substitute into pasta filata cheese without adversely affecting the texture of the cheese.

Pasta filata (plastic curd) cheeses are Italian-type cheeses in which the curd is worked to develop a fiber or string-like texture providing an elasticity in the finished cheese.

Pasta filata cheeses are kneaded while the curd is still in the plastic state to develop the desired texture. This kneading was originally performed by hand, but now may be performed by motor driven stretchers. In such a stretcher, augers fitting loosely within a trough, stretch and compress cheese curd as it is conveyed along the extent of the trough. The stretching develops the fiber or string-like quality for which pasta filata cheeses are valued. The kneading process is conducted at approximately 60°C (140 degrees Fahrenheit) sufficient to provide plasticity to the cheese but below the temperature at which the fiber structure of the cheese would be lost through melting.

Once the structure of the cheese has been developed, the cheese curd is transferred to a molder/chiller system which divides the curd into blocks and cools it. Stretchers and molder/chillers suitable for this purpose are also commercially available from the Johnson/Nelles Corporation of Windsor, Wisconsin.

The cheese blocks may then be transferred to a brining pit in which cold brine chills and floats the blocks to prevent deformation during the remaining cooling process. The chilling in cold brine also adds some salt to the cheese. When the cheese block centre core has reached approximately 7 to 13°C (45 to 55 degrees Fahrenheit) and has the desired salt content requested by the industry of 1.2-1.7%, it may be packaged.

Interest in reduced and low-fat foods has lead to the development of pasta filata cheeses incorporating low-fat cheese substitutes. Such substitutes are mixed into the milk used to generate the curd for the pasta filata cheese prior to its fermentation or may be blended into finished pasta filata by grinding the pasta filata and blending it with the substitute, then melting the blended ingredients together. While these products are frequently referred to as pasta filata type cheeses, their texture and quality make them readily distinguishable from true pasta filata cheese.

### BRIEF SUMMARY OF THE INVENTION

The present invention provides a commercially practical method of incorporating a cheese substitute into a pasta filata cheese without detrimentally affecting its fiber structure. In the invention, the cheese substitute is made by combining rice grains and heated water and subjecting the mixture to high shear to liquefy it without substantial release of water: Although the inventors do not wish to be bound by a particular theory, this high shear method of producing a liquefied rice material is believed to preserve the structure of rice necessary to its great water holding capacity. Further this method is readily adaptable to large process volumes.

Accordingly, there is provided a method of manufacturing reduced and low-fat cheese comprising the steps of:
(a) combining rice grains and heated water in a mixture;
(b) subjecting the mixture to high shear and heat to liquefy the mixture without substantial release of water;
(c) combining the heated and liquefied mixture with finished cheese prior to cooling and molding of the cheese; and
(e) molding and cooling the combined mixture.

The amount of rice and water by volume may stand in a ratio substantially equal to 1:2.

The high shear to which the mixture is subjected may be provided by a mixer head within a heated vessel and/or by a shear pump recirculating the mixture through the heated vessel.

The tank may be a double walled vessel receiving the rice and water within an inner wall of the double walls and having an entry port and a lower drain orifice connecting into a center chamber and a steam source connected to the space between the double walls to heat the inner wall. The mixer head of the shear mixer may be positioned within the vessel to contact the rice and water placed therein. A motorized scraper may scrape the inner wall that contacts the rice and water mixture.

The double walled vessel construction allows heating of large batches of rice and ready shearing of the same.

The method may include the step of accumulating the liquefied mixture of rice and water in a second heated tank prior to its combining with the finished pasta filata, thereby to provide for the integration of a batch-type preparation of the rice and water mixture and a continuous manufacture of pasta filata cheese.

### BRIEF DESCRIPTION OF THE SEVERAL VIEWS OF THE DRAWINGS

Fig. 1 is a simplified perspective view of the apparatus of the present invention for producing a reduced and low-fat pasta filata cheese showing a multiple auger heating system for the rice-based cheese substitute and a spray nozzle positioned over a hopper receiving standard pasta filata cheese and communicating with an upwardly extending kneading vessel;
Fig. 2 is a cross sectional view of the kneading vessel and spray nozzle of Fig. 1 taken along lines 2--2 of Fig. 1 showing the internal auger and the path of standard pasta filata cheese into the upwardly opening hopper;
Fig. 3 is a detailed fragmentary cross-sectional view taken along lines 3--3 of Fig. 1 showing two kneading augers within the kneading chamber of Fig. 2 in intermeshed counter-rotating configuration;
Fig. 4 is a block diagram of the apparatus of Figs. 1-3 showing the path of the rice cheese substitute and standard pasta filata cheese during the process;
Fig. 5 is a cross-sectional view of a preparation vessel that provides an alternative method for the manufacture of the rice cheese substitute;
Fig. 6 shows an arrangement of a manufacturing line employing two kneading vessels of Fig. 2, two of the manufacturing vessels of Fig. 5 and two modified vessels similar to that of Fig. 5 providing holding tanks, together allowing for continuous manufacture of the pasta filata cheese of the present invention.

### DETAILED DESCRIPTION OF THE INVENTION

### Apparatus and Process

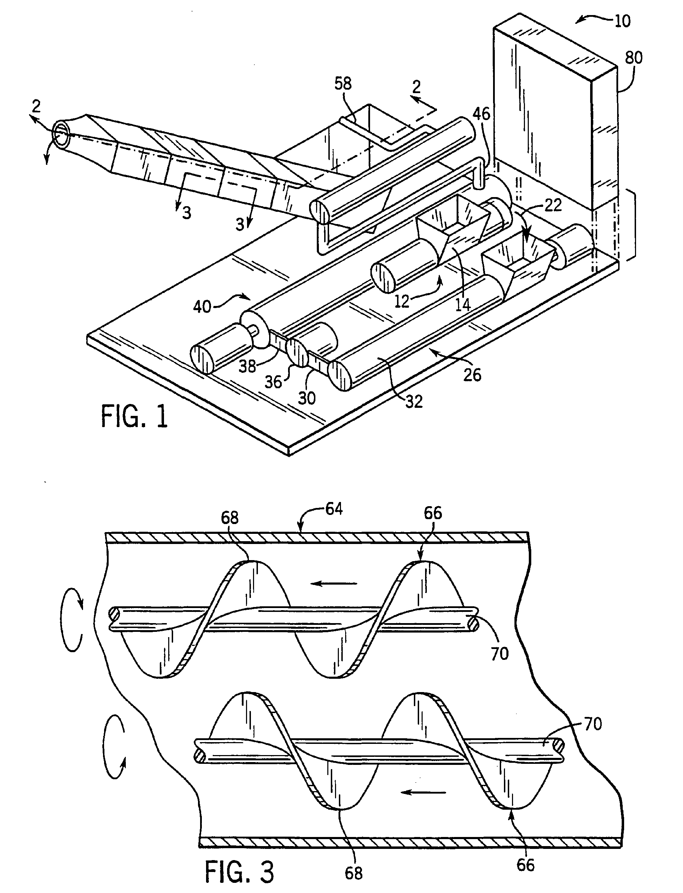

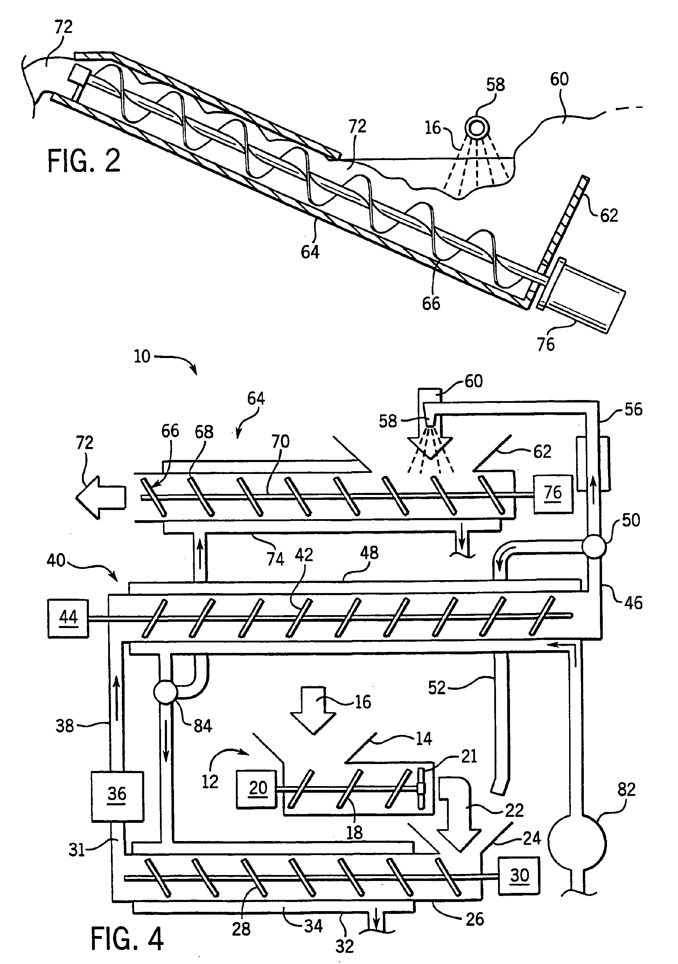

Referring now to Figs. 1 and 4, a reduced and low-fat cheese manufacturing apparatus 10 includes a motor-driven grinder 12 of conventional design having a hopper 14 sized to receive blocks of a rice-based cheese substitute 16 whose preparation will be described in detail below. An auger 18 (shown in Fig. 4) is positioned within the grinder 12 and driven by motor 20 to force the semi-solid rice-based cheese substitute 16 past a cutter bead 21 so as to be macerated and extruded as indicated by arrow 22 for receipt by a second hopper 24.

The second hopper 24 opens into one end of a tubular heating chamber 26 which includes a second auger 28 driven by motor 30 to move the macerated rice-based cheese substitute 16 along the length of the tubular heating chamber 26 from the hopper 24 to an exit port 31 at the opposite end of the tubular heating chamber 26. The tubular heating chamber 26 is jacketed by a concentric hot water jacket 32 through which heated water 34 is passed. The heated water 34 is given a temperature so as to heat the macerated rice-based cheese substitute 16 to approximately 49°C (120 degrees Fahrenheit) as it passes along tubular heating chamber 26.

When the rice-based cheese substitute 16 reaches exit port 31, it is sufficiently liquefied so that it may be received by a metering pump 36 of conventional design which provides a precise volume flow of the rice-based cheese substitute 16 into connecting pipe 38 leading to a second tubular heating chamber 40. Second tubular heating chamber 40 is similar in construction to tubular heating chamber 26 having a generally cylindrical lumen holding a third auger 42 driven by a motor 44 to move the liquefied cheese rice substitute from connecting pipe 38 to an exit port 46. Again, second tubular heating chamber 40 has a hot water jacket 48 regulated to adjust the rice-based cheese substitute 16 to a temperature from 85-88°C (185-190 degrees Fahrenheit). The heated and liquefied rice-based cheese substitute 16 exit port 46 to valve 50 which may recirculate the rice-based cheese substitute 16 through recirculation pipe 52 back to hopper 24 so as to constantly keep the rice-based cheese substitute 16 flowing and heated, even if cheese is not actively being processed.

When pasta filata cheese is being processed, the rice-based cheese substitute 16 passes through tube 56 to a spray nozzle 58. The nozzle 58 is a length of pipe having a plurality of holes drilled in its lower surface to provide an orifice through which a rice-based cheese substitute 16 may exit.

Referring now to Figs. 1, 2, and 4, the reduced and low-fat cheese manufacturing apparatus 10 may be positioned to receive standard pasta filata cheese 60 directly from a stretching machine, but prior to its molding, chilling, or brining. Ideally, the pasta filata cheese 60 is delivered from the stretcher (not shown) at a temperature of approximately 60°C (140 degrees Fahrenheit) and has a fully formed fiber structure. The pasta filata cheese 60 drops into hopper 62 at the base of an upwardly sloping kneading chamber 64. Referring in particular to Fig. 4, the kneading chamber 64 is jacketed with a concentric steam jacket 74 adjusted to a temperature of approximately 60°C (140 degrees Fahrenheit), but beneath the melting point of the cheese mixture 72. The spray nozzle 58 is positioned above the hopper so that liquefied and heated rice-based cheese substitute 16 may be sprayed upon the surface of the pasta filata cheese 60 as it enters the hopper 62. The flow rate of the pasta filatacheese 60 and the rice-based cheese substitute 16 from nozzle 58 may be adjusted so that the combined pasta filata cheese 60 and rice-based cheese substitute 16 (cheese mixture 72)is as high as 10-50% (preferably 35%) rice-based cheese substitute 16 by weight in the finished product.

Referring now to Figs. 2 and 3, positioned within the kneading chamber 64 are twin augers 66 having helical vanes 68 passing in helixes of opposite "hand" around shafts 70 so that the vanes 68 may intermesh while the shafts 70 turn in opposite directions. A motor 76 turns the augers 66 through a conventional gear drive as will be understood to those of ordinary skill in the art The augers 66 so turning provide a generally upward motion to the mixture of the pasta filata cheese 60 and the rice-based cheese substitute 16 through the kneading chamber 64.

The clearance between the vanes 68 and the walls of the kneading chamber 64 and the pitch and speed of the augers 66 is adjusted so that the cheese mixture 72 is stretched and folded between the augers and the inside of the kneading chamber 64 without cutting, so that the fibers of the cheese are preserved, yet coated uniformly with the rice-based cheese substitute 16. Generally, the augers 66 provide a similar action to hand kneading in which the palm of the hand is pressed against a lump of dough of cheese to roll it along a hard surface, stretching and compressing the cheese back upon itself.

At the upper end of the kneading chamber 64 is an exit opening through which the cheese mixture 72 exits as a reduced and low-fat pasta filata cheese. It may then be received by a molder chiller or brining tank of conventional design.

The reduced and low-fat cheese manufacturing apparatus 10 is generally instrumented and controlled through a control panel 80 providing control for the speed of the metering pump 36 of the motors 30, 44, and 76 and of valves necessary to hold the temperatures of the hot water jackets 74, 48, and 32 within the range as described. The heated water 34 may be provided by a steam heat exchanger 82 shown in Fig. 4 which provides heated water 34 directly to hot water jacket 48 which may then be cooled and transmitted to jackets 74 and 32 by metering valve 84.

### The Rice Cheese Substitute

The rice-based cheese substitute 16 is formed principally of rice and water mixed and heated until it reaches a gel-like consistency. Preferably, the rice may be crushed in a grinder to a consistency of approximately two millimeter particle size. A ribbon blender may then be used to mix the rice with approximately twenty five percent water by weight while it is heated to 71°C (160 degrees Fahrenheit) for at least 30 seconds. The rice is then allowed to cool for approximately one hour with blending while other ingredients are added until it has reached approximately 21°C (70 degrees Fahrenheit). It is then molded into forty-pound blocks and refrigerated. The blocks are fed into the hopper 14 of the reduced and low-fat cheese manufacturing apparatus 10 as they are needed.

Although the exact composition of the rice mixture may vary, in a preferred embodiment the rice mixture is compounded of the following ingredients:

| Ingredient | Percent by weight |
|---|---|
| Water | 59 % |
| Rice | 37.2% |
| Corn syrup | 5% |
| Milk powder | 3% |
| B950 food starch | 3% |
| Maltrin M040 | 4.8% |

The above description has been that of a preferred embodiment of the present invention. It will occur to those that practice the art that many modifications may be made. For example, the composition of the rice-based cheese substitute 16 with respect to its minor ingredients may be varied, particularly with respect to emulsifiers and flavouring agents.

### On-Site Manufacture of the Rice-Based Cheese Substitute

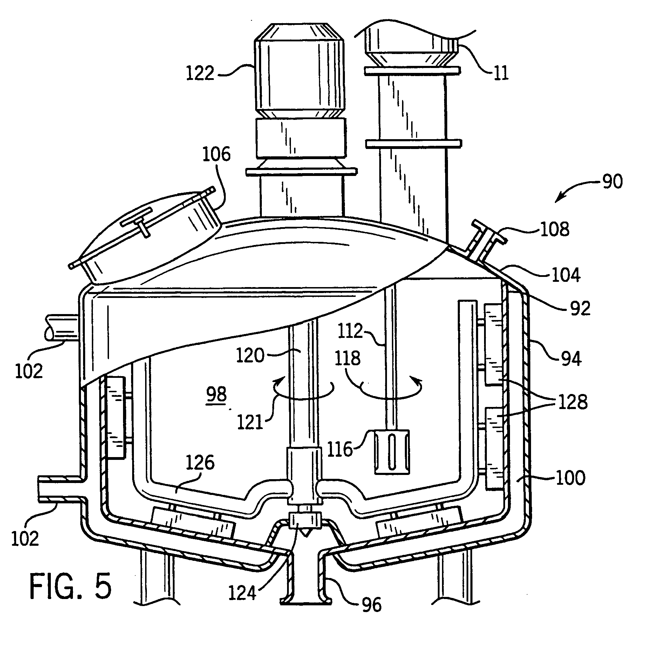

Referring now to Fig. 5, in an alternative embodiment to use of the grinder 12, tubular heating chamber 26 and tubular heating chamber 40 (shown in Fig. 4) to prepare a premanufactured semi-solid rice based cheese substitute 16, these components may be replaced and the need for premanufacturing avoided by using a batch operated heated vessel 90 on-site.

The heated vessel 90 is a double-walled container having a cylindrical inner wall 92 surrounded coaxially by a cylindrical outer wall 94. The walls 92 and 94 continue around a lower base of their respective cylinders to culminate in an axial drain port 96 providing a passage from a mixing volume 98 surrounded by the inner wall 92.

The inner wall 92 and outer wall 94 define between them a steam jacket volume 100 into which steam may be introduced and extracted through ports 102. In this manner, the inner wall 92 may be heated to a controlled temperature so as to heat the material contained within the mixing volume 98.

An upper cover 104 joins the inner wall 92 and outer wall 94 at their upper edges and covers the mixing volume 98. Cover 104 is breached by access hatch 106 into which ingredients as will be described may be introduced. A smaller entrance port 108 through cover 104 allows for the recirculation of material from inside the volume 98 out through the drain port 96 and back into the entrance port 108 as will also be described.

Mounted on top of the cover 104 is a shear mixer motor 110 driving a shaft 112 piercing the cover 104 and terminating within the volume 98 at a high shear mixer head 116. Such mixer heads 116 are well known in the art and are commercially available from Admix of Manchester, New Hampshire, United States under the tradename Rotosolver. During operation, the high shear mixer head 116 will rotate as indicated by arrow 118.

The shaft 112 may be off center to the center axis of the cylindrical volume 98 to allow for the passage of a scraper shaft 120 through cover 104 along the center axis. The scraper shaft 120 is driven by scraper motor 122 also mounted on top of cover 104. The scraper shaft 120 terminates at its lower end at a bearing 124 axially, aligned with the drain port 96 but supported above the drain port 96 so as to not obstruct it. Scraper shaft 120 rotates about its extent as driven by the scraper motor 122 and as indicated by arrow 121.

Extending symmetrically and radially outward from the lower end of the scraper shaft 120, above the bearing 124, are scraper arms 126 which follow along and above the portion of the inner wall 92 forming the lower base and along and inside the portion of the inner wall 92 forming cylindrical vertical walls. Scraper blades 128 are attached along the arms 126 between the arms and the inner wall 92 so as to scrape along the inner wall 92 preventing overheating of material immediately adjacent to the heated inner walls 92. Scraper blades 128 are staggered with respect to the opposing arm 126 so as to provide essentially uniform coverage of the inner wall 92 adjacent to steam jacket volume 100_

During operation, rice grains and heated water may be introduced through access hatch 106. Preferably the rice grains are unground rice comprising whole grains and broken grains such as naturally occur during grain shipping and handling. Other ingredients according to the table provided above may also be added at this time. Steam introduced into the steam jacket volume 100 maintains the mixture at between 85-88°C (185 and 190°F). while it is blended with the high shear mixer head 116 and prevented from caking to the inner wall 92 by scraper blades 128.

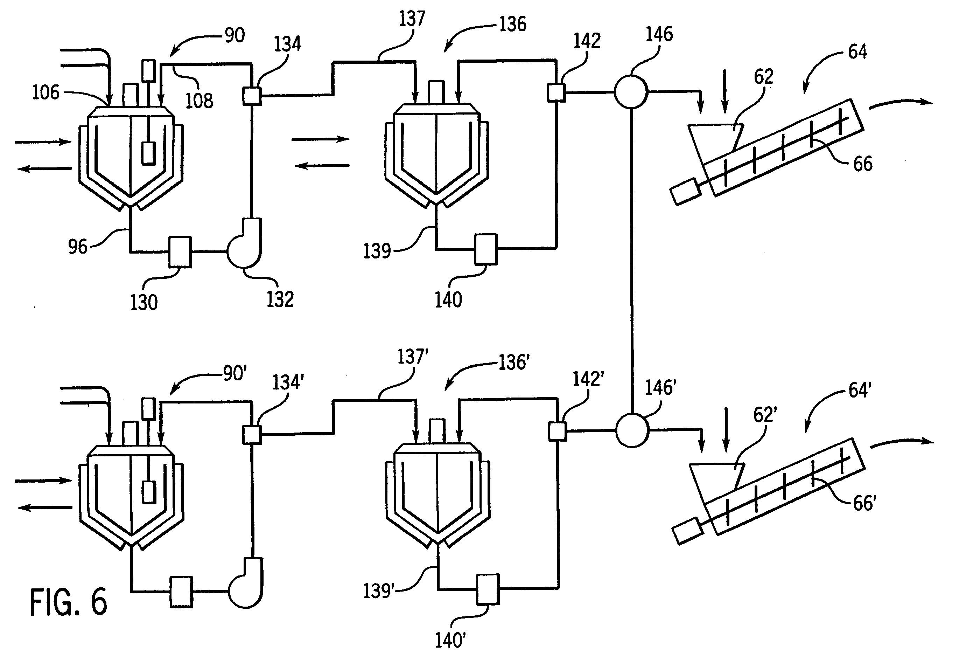

Referring now to Fig. 6 during blending, the mixture may be extracted from drain port 96 to be pumped by positive displacement pump 130 and then by shear pump 132 through valve 134 back into entrance port 108 providing additional shearing of the mixture and its constant recirculation.

Still referring to Fig. 6, two such vessels 90 and 90' may be arranged to operate in tandem so that one vessel may be cleaned or refitted while the other vessel is creating the rice water blend By means of valve 134, (or valve 134' on tank 90'), the contents of the vessels 90 and 90', respectively, may be pumped to a pasteurizing tank 136 (or 136') being identical to vessels 90 and 90' except for the absence of the shear mixer motor 110, shaft 112, and high shear mixer head 116. Tanks 136 and 136' include inlet ports 137, 137' connected each to an outlet of valves 134 or 134'.

The pasteurizing tanks 136,136' may each have a positive feed pump 140 (or 140') receiving mixture from the tank 136 or 136' through drain ports 139 or 139' respectively, corresponding generally to drain port 96 as pumped by the pumps 140 or 140' to valves 142 or 142' for recirculation back into the tanks 136, 136'. Valves 142 and 142' provide the rice water mixture to two way valves 146 and 146' which may direct the mixture either of hopper 62 or 62' of two corresponding kneading chambers 64 or 64' or to a second inlet on the other valve 146, 146'

Thus, vessels 90 and 90' may be operated on a batch or intermittent basis with their product shunted to respective pasteurizing tanks 136 or 136' for pasteurizing and holding. Tanks 136 and 136' may hold the cheese rice substitute until it is needed and then via valves 142 and 142' set to provide either of the kneading chambers 164 or 164' with mixture. As have been previously described, each kneading chamber 164 or 164' includes an auger 66 or 66' for kneading the rice water mixture into pasta filata cheese.

It will be understood, therefore, that the kneading chambers 64 and 64' may be operated on an essentially continuous basis with the rice cheese substitute being manufactured in batches in vessels in 90 and 90'. Further the operation of the equipment need not be halted for cleaning operations of the vessels 90,90',136 or 136' as dual flow paths exist to either of the kneading chambers 64 or 64'.

The above description has been that of a preferred embodiment of the present invention, it will occur to those that practice the art that many modifications may be made. For example, the rice based cheese substitute of the present invention may find use in process and other cheese types beyond pasta filata.

## Claims

1. A method of manufacturing reduced and low-fat cheese comprising the steps of:
(a) combining rice grains and heated water in a mixture;
(b) subjecting the mixture to high shear and heat to liquefy the mixture without substantial release of water;
(c) combining the heated and liquefied mixture with finished cheese prior to cooling and molding of the cheese; and
(e) molding and cooling the combined mixture.

2. The method of claim 1 wherein at step (b) the heated water is at a temperature substantially equal to boiling water.

3. The method of claim 1 wherein at step (b) the mixture is heated to a temperature of 85 degrees Centigrade.

4. The method of claim 1 wherein the amount of rice and water by volume stand in a ratio substantially equal to 1:2.

5. The method of claim 1 wherein the high shear of step (b) is provided by a mixer head in a heated vessel.

6. The method of claim 1 wherein the high shear of step (b) is provided by a shear pump recirculating the mixture though a heated vessel.

7. The method of claim 1 including the step of accumulating the liquefied mixture in a heated tank after step between steps (b) and (c)
whereby step steps (a) and (b) may be performed as a batch process and steps (c) - (e) may be performed continuously.

8. The method of claim 1 step of heating the walls of the vessel during steps (a) and (b).

9. The method of claim 1 step of scraping the walls of the vessel during steps (a) and (b).

10. A method according to claim 1, wherein the finished cheese is prepared by:
placing standard pasta filata cheese in a kneading vessel before it is molded and cooled;
kneading the standard pasta filata cheese within the kneading vessel to alternately stretch and compress the standard pasta filata cheese without a substantial cutting of fibres of the pasta; and
spraying the surface of the kneaded standard pasta filata cheese with the mixture of water and rice until that mixture is incorporated into the standard pasta filata cheese;
whereby a reduced and low-fat pasta filata cheese is produced without loss of texture.

11. The method of claim 10, wherein the kneading vessel is an elongate trough and the kneader is an auger and including the step of turning the auger so as to advance the combined standard pasta filata cheese and rice-based cheese substitute along the trough from a receiving opening to an exit opening on a substantially continuous basis as the cheese is stretched and compressed.

12. The method of claim 10 including the step of heating the cheese substitute to 85-88°C (185-190 degrees Fahrenheit) prior to receipt by the spray head.

13. A reduced and low-fat pasta filata cheese produced by a method according to claim 10.

## Patentansprüche

1. Verfahren zur Herstellung von Käse mit reduziertem und niedrigem Fettgehalt, umfassend die folgenden Schritte:
(a) Vermengen von Reiskörnern und erwärmtem Wasser in einem Gemisch,
(b) Aussetzen des Gemisches einer hohen Scherung und Wärme, um das Gemisch ohne wesentliche Wasserfreisetzung zu verflüssigen,
(c) Vermengen des erwärmten und verflüssigten Gemisches mit fertigem Käse vor dem Abkühlen und Formen des Käses und
(e) Formen und Abkühlen des vermengten Gemisches.

2. Verfahren nach Anspruch 1, worin bei Schritt (b) das erwärmte Wasser eine im Wesentlichen kochendem Wasser entsprechende Temperatur hat.

3. Verfahren nach Anspruch 1, worin bei Schritt (b) das Gemisch auf eine Temperatur von 85 Grad Celsius erwärmt wird.

4. Verfahren nach Anspruch 1, worin die Reismenge und die Wassermenge in einem Volumen-Verhältnis im Wesentlichen von 1:2 vorhanden sind.

5. Verfahren nach Anspruch 1, worin die hohe Scherung von Schritt (b) durch einen Mixerkopf in einem erwärmten Gefäß bereitgestellt wird.

6. Verfahren nach Anspruch 1, worin die hohe Scherung von Schritt (b) durch eine Scherpumpe bereitgestellt wird, die das Gemisch in einem erwärmten Gefäß umpumpt.

7. Verfahren nach Anspruch 1, umfassend den Schritt des Anhäufens des verflüssigten Gemisches in einem erwärmten Behälter als Schritt zwischen den Schritten (b) und (c),
wobei die Schritte (a) und (b) als Chargenbetrieb und die Schritte (c) und (e) kontinuierlich ausgeführt werden können.

8. Verfahren nach Anspruch 1, wobei der Schritt des Erwärmens der Wände des Gefäßes während der Schritte (a) und (b) ausgeführt wird.

9. Verfahren nach Anspruch 1, wobei der Schritt des Abkratzens der Wände des Gefäßes während der Schritte (a) und (b) ausgeführt wird.

10. Verfahren nach Anspruch 1, worin der fertige Käse durch folgende Schritte hergestellt wird:
Positionieren des herkömmlichen Pasta-Filata-Käses in einem Knetgefäß bevor dieser geformt und gekühlt wird,
Kneten des herkömmlichen Pasta-Filata-Käses im Knetgefäß, um den herkömmlichen Pasta-Filata-Käse abwechselnd zu dehnen und zu komprimieren, ohne dabei die Pastafasern merklich zu schneiden, und
Besprühen der Oberfläche des gekneteten herkömmlichen Pasta-Filata-Käses mit dem Wasser- und Reisgemisch bis die Mischung im herkömmlichen Pasta-Filata-Käse aufgenommen ist, wodurch ein Pasta-Fillata-Käse mit reduziertem und niedrigem Fettgehalt ohne Strukturverlust erzeugt wird.

11. Verfahren nach Anspruch 10, worin das Knetgefäß eine längliche Wanne ist und die Knetvorrichtung eine Schnecke ist und welches den Schritt des Drehens der Schnecke umfasst, um das Gemisch aus herkömmlichem Pasta-Filata-Käse und Käseersatz auf Reisbasis entlang der Wanne von einer Einlassöffnung zu einer Auslassöffnung auf einer im Wesentlichen kontinuierlichen Basis voranzubewegen, während der Käse gedehnt und komprimiert wird.

12. Verfahren nach Anspruch 10, umfassend den Schritt des Erwärmens des Käseersatzes auf 85-88 °C (185-190 Grad Fahrenheit) vor der Aufnahme durch den Sprühkopf.

13. Pasta-Filata-Käse mit reduziertem oder niedrigem Fettgehalt, der mithilfe eines Verfahrens nach Anspruch 10 erzeugt wird.

## Revendications

1. Procédé de fabrication de fromage à teneur réduite et à faible teneur en matière grasse, comprenant les étapes consistant à:
(a) combiner des grains de riz et de l'eau chauffée dans un mélange;
(b) soumettre le mélange à un cisaillement élevé et le chauffer afin de liquéfier le mélange pratiquement sans libération d'eau;
(c) combiner le mélange chauffé et liquéfié avec du fromage fini avant refroidissement et moulage du fromage; et
(e) mouler et refroidir le mélange combiné.

2. Procédé selon la revendication 1, dans lequel, à l'étape (b), l'eau chauffée est à une température sensiblement égale a celle de l'eau bouillante.

3. Procédé selon la revendication 1, dans lequel, à l'étape (b), le mélange est chauffé à une température de 85 degrés centigrades.

4. Procédé selon la revendication 1, dans lequel le ratio des quantités de riz et d'eau en volume est sensiblement égal à 1:2.

5. Procédé selon la revendication 1, dans lequel le cisaillement élevé de l'étape (b) est assuré par une tête de mélangeur dans un récipient chauffé.

6. Procédé selon la revendication 1, dans lequel le cisaillement élevé de l'étape (b) est assuré par une pompe à cisaillement qui fait circuler le mélange dans un récipient chauffé.

7. Procédé selon la revendication 1, comprenant l'étape consistant à accumuler le mélange liquéfié dans une cuve chauffée dans une étape entre les étapes (b) et (c), les étapes (a) et (b) pouvant se faire sous la forme d'un procédé par lots et les étapes (c) à (e) pouvant se faire en continu.

8. Procédé selon la revendication 1, comprenant l'étape consistant à chauffer les parois du récipient au cours des étapes (a) et (b).

9. Procédé selon la revendication 1, comprenant l'étape consistant à racler les parois du récipient au cours des étapes (a) et (b).

10. Procédé selon la revendication 1, dans lequel le fromage fini est préparé en:
plaçant du fromage à pâte filée standard dans un récipient de malaxage avant de le mouler et de le refroidir;
malaxant le fromage à pâte filée standard dans le récipient de malaxage afin d'étirer et comprimer alternativement le fromage à pâte filée standard pratiquement sans coupure des fibres de la pâte; et
pulvérisant sur la surface du fromage à pâte filée standard malaxé le mélange d'eau et de riz jusqu'à ce que le mélange soit incorporé dans le fromage à pâte filée standard;
afin de produire un fromage à pâte filée à teneur réduite et à faible teneur en matière grasse sans perte de texture.

11. Procédé selon la revendication 10, dans lequel le récipient de malaxage est une cuve allongée et le malaxeur est une vis, comprenant l'étape consistant à faire tourner la vis de façon à faire avancer le fromage à pâte filée standard et le substitut de fromage à base de riz combinés le long de la cuve depuis une ouverture de réception jusqu'à une ouverture de sortie de manière sensiblement continue tandis que le fromage est étiré et comprimé.

12. Procédé selon la revendication 10, comprenant l'étape consistant à chauffer le substitut de fromage à une température dans la plage de 85 à 88°C (185 à 190 degrés Fahrenheit) avant qu'il soit reçu dans la tête de pulvérisation.

13. Fromage à pâte filée à teneur réduite et à faible teneur en matière grasse, produit par un procédé selon la revendication 10.
